# EUROPEAN PATENT APPLICATION

(11) **EP 4 807 936 A1**
(43) Date of publication of application: **16.09.2026**
(21) Application number: 23958194.5
(22) Date of filing: 06.11.2023
(51) Int. Cl.: H02J 3/28

(54) **POWER SYSTEM STABILIZATION SYSTEM, STARTUP METHOD FOR POWER SYSTEM STABILIZATION SYSTEM, AND CONTROL DEVICE**

(71) Applicant: Mitsubishi Electric Corporation, Tokyo 100-8310 (JP)
(72) Inventor: TANAKA, Miwako, Tokyo 100-8310 (JP); TOI, Takato, Tokyo 100-8310 (JP); MUKUNOKI, Kaho, Tokyo 100-8310 (JP); TABUCHI, Akiko, Tokyo 100-8310 (JP)
(74) Representative: Hoffmann Eitle
(86) International application number: PCT/JP2023/039802
(87) International publication number: WO 2025/099787

(57) **Abstract**

A power system stabilization system (2) is interconnected with an AC system (1) and includes a power conversion device (10) and a power storage device (20). The power conversion device (10) includes a power converter (120) including a circuit in which a plurality of converter cells (5), each of which includes a plurality of semiconductor switching elements (12U, 12L) and a power storage element (14), are connected in series, and a control device (140). The power storage device (20) includes a power storage bank (220), and a management device (240) that manages the state of the power storage bank (220). The control device (140) performs control so that, based on information, on the state of the power storage bank (220), obtained from the management device (240), the power storage element (14) in each converter cell (5) is charged to a first reference value (Vth1) using the power of the power storage bank (220) via a first resistor (36), then the semiconductor switching elements (12U, 12L) are driven, and the DC voltage (Vdc) and the AC voltages (Vu, Vv, Vw) of the power converter (120) reach predetermined values.

## Description

### TECHNICAL FIELD

The present disclosure relates to a power system stabilization system, a startup method for the power system stabilization system, and a control device.

### BACKGROUND ART

In recent years, the introduction of renewable energy has been accelerating in pursuit of achieving carbon neutrality. Unlike generators such as thermal power generators, renewable energy sources lack "inertia", which is the ability to withstand instantaneous electrical changes. Thus, the share of renewable energy increases, and generators such as thermal power generators decrease in proportion, so that issues such as the reduction in inertia in power systems and load leveling in renewable energy systems have become more pronounced.

The reduction in inertia in power generation causes unstable power supply in the power system. Therefore, in order to compensate for the reduced transient stability caused by lower inertia in the power system, a system including a power storage element and a power conversion device is constructed, and a technology has been developed to supply power from this system. As one example of such a system, a system in which multiple power converters are connected in parallel and provided with 1 kV-class storage batteries is employed.

On the other hand, as a reactive power compensation device for stabilizing the voltage of a power system and improving system stability, a modular multilevel converter (hereinafter, referred to as MMC) capable of achieving high-voltage and high-power performance by connecting converter cells equipped with semiconductor switching elements and capacitors in series or in parallel has been put into practical use.

Patent Document 1 discloses a power compensation device that suppresses system frequency and power fluctuations by including a power storage apparatus on the DC side of the MMC and supplying or absorbing not only reactive power but also active power.

### CITATION LIST

### PATENT DOCUMENT

Patent Document 1: Japanese Patent Publication No. 6549190
Patent Document 2: Japanese Patent Publication No. 6598749

### SUMMARY OF THE INVENTION

### PROBLEM TO BE SOLVED BY THE INVENTION

If an MMC is directly connected to a DC power source in a state where capacitors in the converter cells are uncharged, an inrush current flows into the capacitors through the diodes in the converter cells. In addition, when the MMC is connected to an AC power source, if the AC voltage output by the MMC significantly differs from the voltage of the AC power source, an overcurrent flows through the MMC. Therefore, when the MMC is connected to the DC power source and the AC power source, it is necessary to charge the capacitors in the converter cells of the MMC, perform control so that the DC voltage of the MMC becomes approximately equal to the voltage of the DC power source and the AC voltage of the MMC becomes approximately equal to the voltage of the AC power source, and start the system.

In response to such a problem, according to the technology described in Patent Document 1, an MMC that includes a power storage device and is connected to a renewable energy source has an initial charging mode, and when capacitors in converter cells are insufficiently charged, the capacitors are charged using power from the power storage device. However, a method for stably starting a power compensation device is not mentioned.

On the other hand, Patent Document 2 discloses a power conversion device and an initial charging method in which an AC power source for charging is provided to charge capacitors in converter cells and start the system. However, a dedicated power source for initial charging is required in addition to the system power source, resulting in increased equipment size and cost.

The present disclosure has been made to solve the above problem, and an object of the present disclosure is to provide a power system stabilization system that does not require a dedicated initial-charging power source for initially charging capacitors in converter cells and that can stably start, a startup method thereof, and a control device.

### MEANS TO SOLVE THE PROBLEM

A power system stabilization system according to the present disclosure is directed to
a power system stabilization system which is interconnected with an AC system, the power system stabilization system including:
a power conversion device; and
a power storage device, wherein
a DC side of the power conversion device is connected to the power storage device, via a connected assembly in which a first switch and a first resistor are connected in parallel and a second switch,
an AC side of the power conversion device is connected to the AC system, via a connected assembly in which a third switch and a second resistor are connected in parallel and a fourth switch,
the power conversion device includes a power converter including a circuit in which a plurality of converter cells, each of which includes a plurality of semiconductor switching elements and a power storage element, are connected in series, and a control device that controls driving of the semiconductor switching elements,
the power storage device includes a power storage bank including a plurality of power storage units, and a management device that manages a state of the power storage bank including at least a charge/discharge state of each power storage unit, and
the control device performs control so that,
   based on information, on the state of the power storage bank, obtained from the management device, the power storage element in each converter cell is charged to a first reference value using power of the power storage bank via the first resistor,
   then the plurality of semiconductor switching elements are driven, and
   a DC voltage and an AC voltage of the power converter reach predetermined values.

### EFFECT OF THE INVENTION

According to the present disclosure, it is possible to provide a power system stabilization system that does not require a dedicated power source for charging the power storage element in each converter cell and can stably start through startup control using the power of the power storage device and on the basis of the state of the power storage device, and a startup method thereof.

### BRIEF DESCRIPTION OF THE DRAWINGS

[FIG. 1] FIG. 1 is a schematic configuration diagram showing a power system stabilization system according to embodiment 1.
[FIG. 2] FIG. 2 shows the configuration of a power conversion device according to embodiment 1.
[FIG. 3] FIG. 3 is a circuit diagram showing an example of the configuration of a converter cell forming the power conversion device.
[FIG. 4] FIG. 4 schematically shows the configuration of a power storage device according to embodiment 1.
[FIG. 5A] FIG. 5A shows the configuration of a power storage unit forming the power storage device.
[FIG. 5B] FIG. 5B shows another configuration of the power storage unit forming the power storage device.
[FIG. 6] FIG. 6 is a flowchart showing a startup sequence for the power system stabilization system according to embodiment 1.
[FIG. 7A] FIG. 7A schematically shows a charging path for converter cells in the U and V phases.
[FIG. 7B] FIG. 7B schematically shows a charging path for the converter cells in the U and V phases.
[FIG. 7C] FIG. 7C schematically shows a charging path for converter cells in the U and V phases.
[FIG. 7D] FIG. 7D schematically shows a charging path for the converter cells in the U and V phases.
[FIG. 8A] FIG. 8A shows the discharge characteristics of storage batteries forming the power storage unit.
[FIG. 8B] FIG. 8B shows the discharge characteristics of supercapacitors forming the power storage unit.
[FIG. 9A] FIG. 9A is a flowchart showing a startup sequence for a power system stabilization system according to embodiment 2.
[FIG. 9B] FIG. 9B is a flowchart of a startup sequence for the power system stabilization system according to embodiment 2.
[FIG. 10A] FIG. 10A shows the charge characteristics of the storage batteries forming the power storage unit.
[FIG. 10B] FIG. 10B shows the charge characteristics of the supercapacitors forming the power storage unit.
[FIG. 11] FIG. 11 is a flowchart showing a startup sequence for a power system stabilization system according to embodiment 3.
[FIG. 12] FIG. 12 shows the OCV-SOC characteristics of the storage batteries forming the power storage unit.
[FIG. 13] FIG. 13 is a hardware configuration diagram showing an example of a control device of the power conversion device and a management device of the power storage device according to each embodiment.

### DESCRIPTION OF EMBODIMENTS

Hereinafter, the present embodiments will be described with reference to the drawings. In the drawings, the same or corresponding parts are denoted by the same reference characters.

In the following description, it is assumed that a power system stabilization system is connected to a renewable energy source. In addition, the term "startup" includes both startup when initially charging capacitors in converter cells and startup when restarting the system after a shutdown caused by an accident, etc.

### Embodiment 1

### <Configuration of power system stabilization system>

Hereinafter, a power system stabilization system according to embodiment 1 will be described with reference to the drawings.

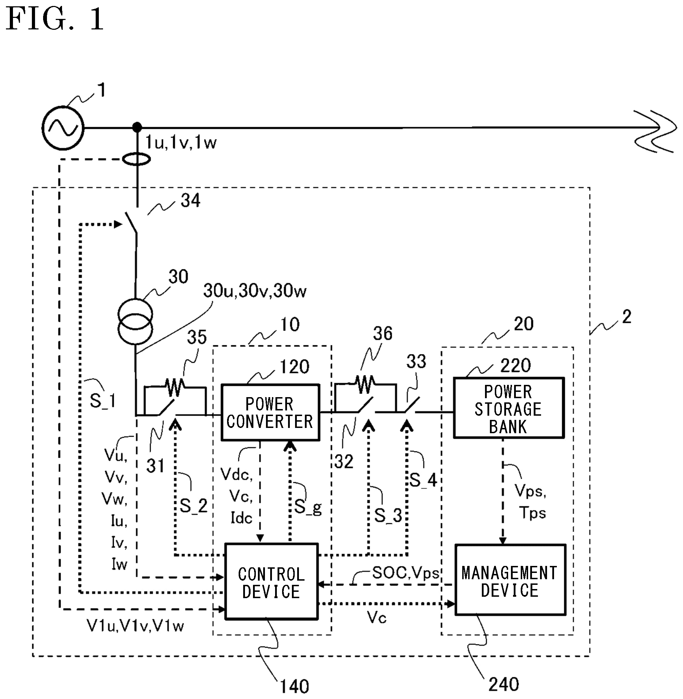

FIG. 1 is a schematic configuration diagram showing the configuration of the power system stabilization system according to embodiment 1, and a power system stabilization system 2 includes a power conversion device 10 and a power storage device 20. In FIG. 1, the power system stabilization system 2 is interconnected with an AC system 1, and the AC terminal of the power conversion device 10 is connected to the AC system 1 via an AC breaker 34, a transformer 30, and a connected assembly in which a switch 31 and a resistor 35 are connected in parallel.

In addition, the power system stabilization system 2 includes the power storage device 20 on the DC side of the power conversion device 10, and power between the power conversion device 10 and the power storage device 20 is exchanged via a connected assembly in which a switch 32 and a resistor 36 are connected in parallel and a DC breaker 33.

The power conversion device 10 includes a power converter 120 and a control device 140, and the power storage device 20 includes a power storage bank 220 and a management device 240.

### <Configuration of power conversion device 10>

Next, the configuration of the power conversion device 10 will be described with reference to the drawings.

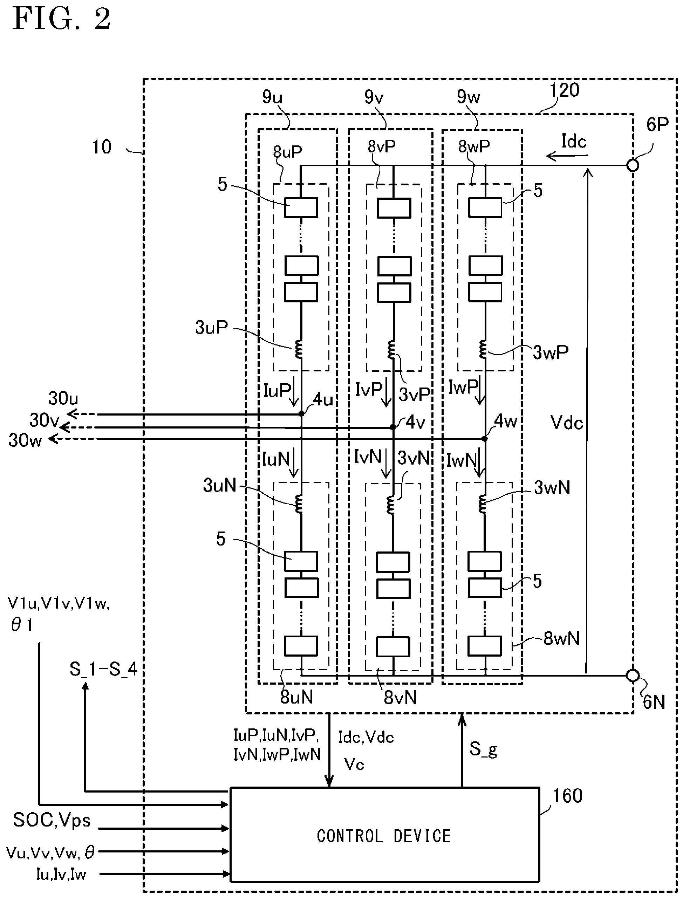

FIG. 2 shows the configuration of the power conversion device 10 according to embodiment 1. The power converter 120 performs bidirectional power conversion between AC and DC, the AC side of power converter 120 is connected to the AC system (AC circuit) 1, which is configured as a polyphase AC (e.g., three-phase AC), via the transformer 30, and a positive DC terminal 6P and a negative DC terminal 6N of the power converter 120 are connected to the power storage device 20 via the connected assembly in which the switch 32 and the resistor 36 are connected in parallel.

The power converter 120 includes three leg circuits 9u, 9v, 9w that are respectively corresponding to the u, v, and w phases of the three-phase AC and that are connected in parallel between the positive DC terminal 6P and the negative DC terminal 6N.

The leg circuit 9u includes, as a pair of arms, a positive arm 8uP and a negative arm 8uN, and the positive arm 8uP and the negative arm 8uN are connected in series with each other. One end of the positive arm 8uP is connected to the positive DC terminal 6P, and one end of the negative arm 8uN is connected to the negative DC terminal 6N. In addition, a connection point 4u between the positive arm 8uP and the negative arm 8uN is connected to a u-phase terminal 30u of the transformer 30.

The leg circuit 9v includes, as a pair of arms, a positive arm 8vP and a negative arm 8vN, and the positive arm 8vP and the negative arm 8vN are connected in series with each other. One end of the positive arm 8vP is connected to the positive DC terminal 6P, and one end of the negative arm 8vN is connected to the negative DC terminal 6N. In addition, a connection point 4v between the positive arm 8vP and the negative arm 8vN is connected to a v-phase terminal 30v of the transformer 30.

The leg circuit 9w includes, as a pair of arms, a positive arm 8wP and a negative arm 8wN, and the positive arm 8wP and the negative arm 8wN are connected in series with each other. One end of the positive arm 8wP is connected to the positive DC terminal 6P, and one end of the negative arm 8wN is connected to the negative DC terminal 6N. In addition, a connection point 4w between the positive arm 8wP and the negative arm 8wN is connected to a w-phase terminal 30w of the transformer 30.

Next, the configurations of the leg circuits 9u, 9v, 9w will be described. The leg circuits 9v, 9w corresponding to the v phase and the w phase have the same configuration as the leg circuit 9u corresponding to the u phase, and therefore, the leg circuit 9u corresponding to the u phase will be described as a representative.

The positive arm 8uP of the leg circuit 9u includes a plurality of converter cells 5 connected in series and a reactor 3uP, and the plurality of converter cells 5 and the reactor 3uP are connected in series with each other. Similarly, the negative arm 8uN of the leg circuit 9u includes a plurality of converter cells 5 connected in series and a reactor 3uN, and the plurality of converter cells 5 and the reactor 3uN are connected in series with each other.

The reactor 3uP may be placed at any position within the positive arm 8uP, and similarly, the reactor 3uN may also be placed at any position within the negative arm 8uN. The reactors 3uP, 3uN may have different inductance values, and may be coupled with a reactor in another phase. Further, a configuration in which the reactor 3uP is only provided in the positive arm 8uP, or a configuration in which the reactor 3uN is only provided in the negative arm 8uN may be adopted.

### <Configuration of converter cell 5>

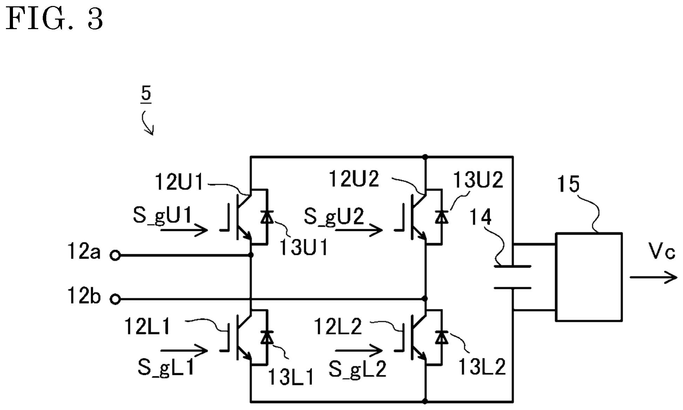

FIG. 3 is a circuit diagram showing an example of the converter cell 5 configured as a full bridge. In FIG. 3, the converter cell 5 includes a series unit of semiconductor switching elements 12U1, 12L1 which are semiconductor switching elements connected in series with each other, a series unit of semiconductor switching elements 12U2, 12L2 which are also semiconductor switching elements connected in series with each other, a capacitor 14 serving as a power storage element for energy storage, and a voltage detector 15 that detects the capacitor voltage Vc of the capacitor 14. The series unit of the semiconductor switching elements 12U1, 12L1, the series unit of the semiconductor switching elements 12U2, 12L2, and the capacitor 14 are connected in parallel.

In addition, diode elements 13U1, 13L1 are respectively connected in reverse parallel to the semiconductor switching elements 12U1, 12L1. In addition, diode elements 13U2, 13L2 are respectively connected in reverse parallel to the semiconductor switching elements 12U2, 12L2. The expression "the diode element is connected in reverse parallel" means that the diode element is connected in parallel and in a reverse bias direction.

The semiconductor switching elements are self-turn-off semiconductor switching elements, and for example, insulated-gate bipolar transistors (IGBTs), metal oxide semiconductor field effect transistors (MOSFETs), or the like can be used.

In FIG. 3, in the converter cell 5, the semiconductor switching elements 12U1, 12L1 are controlled by gate drive signals S_gU1, S_gL1 from the control device 140 such that one of the semiconductor switching elements 12U1, 12L1 is in the ON state and the other is in the OFF state. Similarly, the semiconductor switching elements 12U2, 12L2 are controlled by gate drive signals S_gU2, S_gL2 from the control device 140 such that one of the semiconductor switching elements 12U2, 12L2 is in the ON state and the other is in the OFF state. When referred to collectively, the gate drive signals are denoted by S_g, and when referred to collectively, the semiconductor switching elements are denoted by 12.

When the semiconductor switching element 12U1 is in the ON state and the semiconductor switching element 12L1 is in the OFF state, and at the same time, the semiconductor switching element 12U2 is in the OFF state and the semiconductor switching element 12L2 is in the ON state, the voltage across the capacitor 14 is applied between an input/output terminal 12a and an input/output terminal 12b. Here, a positive electrode voltage is applied to the input/output terminal 12a side, and a negative electrode voltage is applied to the input/output terminal 12b side. Further, the power conversion device 10 includes not only the voltage detector 15 that detects the capacitor voltage Vc of the capacitor 14, but also a plurality of detectors that detect the DC voltage Vdc and the DC current Idc of the power converter 120, the current IuP, IuN, IvP, IvN, IwP, IwN flowing through the arms, and the like.

### <Configuration of control device 140>

The control device 140 receives, as input, at least the voltages V1u, V1v, V1w in the respective phases 1u, 1v, 1w of the AC system 1 and a reference phase θ1 thereof, the AC voltages Vu, Vv, Vw of the power converter 120 and a reference phase θ thereof, the DC voltage Vdc of the power converter 120, the capacitor voltage Vc which is the output voltage of each converter cell 5, and the voltage Vps of the power storage bank 220 and the state of charge (hereinafter, referred to as "SOC") of the power storage bank 220 from the management device 240 of the power storage device 20. The AC-side voltage of the power converter 120 is the voltage between the power converter 120 and the transformer 30.

The control device 140, based on each input signal, outputs the gate drive signal S_g to each gate of the semiconductor switching elements in the converter cells 5 included in the power converter 120, performs on/off drive control, outputs switching signals S_1 to S_4 to the switches 31, 32, the DC breaker 33, and the AC breaker 34, and performs control so that the power system stabilization system 2 stably starts.

The exchange of signals between the control device 140 and the management device 240 is performed via communication.

### <Configuration of power storage device 20>

Next, the configuration of the power storage device 20 will be described with reference to the drawings.

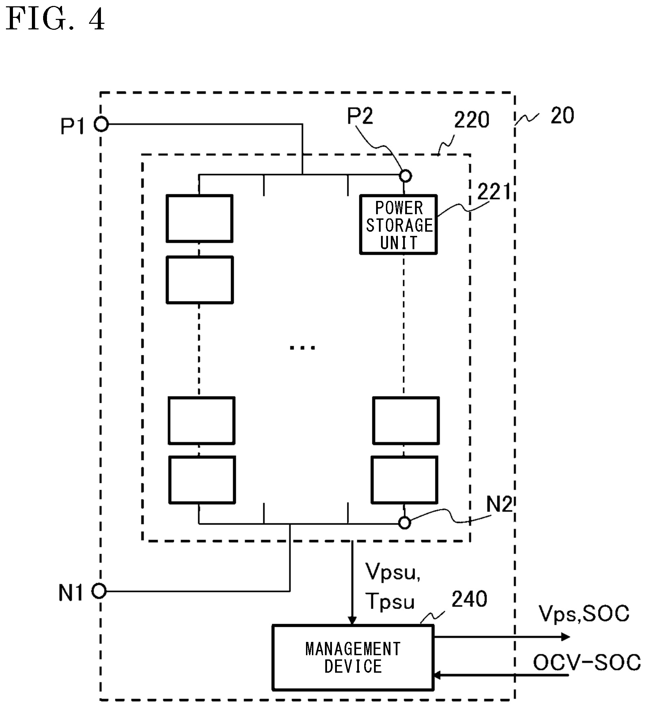

FIG. 4 schematically shows the configuration of the power storage device according to embodiment 1. In FIG. 4, the power storage device 20 includes the power storage bank 220 in which a plurality of power storage units 221 are connected in series and parallel, and the management device 240 that manages information, on the state of each power storage unit 221, including the voltage Vpsu, the temperature Tps, and the like. The management device 240 calculates the overall voltage Vps of the power storage bank 220 on the basis of the information on the state, which includes the voltage Vpsu, the temperature Tpsu, and the like and which has been obtained from each power storage unit 221, and transmits the overall voltage Vps along with the SOC of the power storage bank 220 to the control device 140 of the power conversion device 10. Although described below, the relationship between the SOC and the open circuit voltage (hereinafter, referred to as OCV) of a power storage element is inputted to the management device 240 to calculate the SOC in some cases.

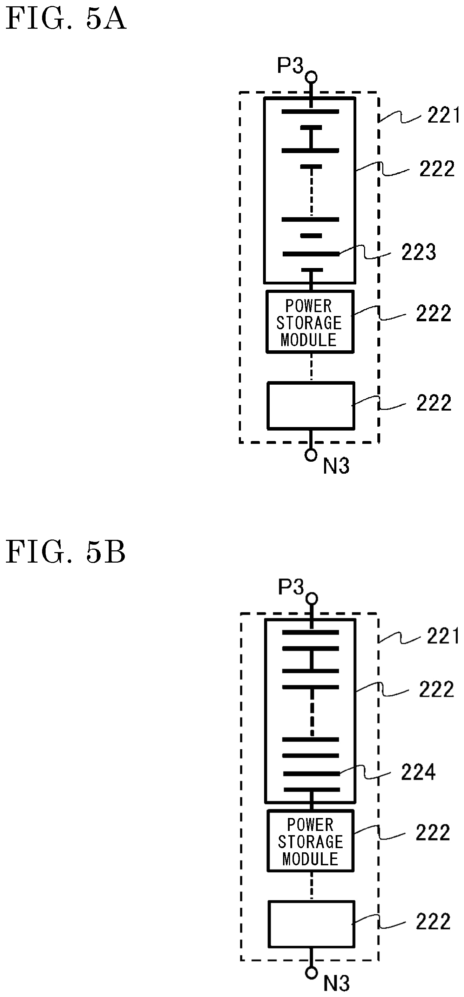

FIG. 5A shows an example of the configuration of the power storage unit 221, and a plurality of power storage modules 222, each of which is formed by connecting a plurality of storage batteries 223 serving as a power storage element in series, are connected in series, thereby forming the power storage unit 221.

FIG. 5B shows an example of another configuration of the power storage unit 221, and a plurality of power storage modules 222, each of which is formed by connecting a plurality of electric double-layer supercapacitors 224 serving as a power storage element in series, are connected in series, thereby forming the power storage unit 221.

Two examples of the power storage elements are shown. However, as long as the power storage element can store energy and electrically input and output the stored energy, the present disclosure is not particularly limited thereto.

The plurality of power storage units 221 are connected in series via terminals P3, N3 to form a series unit, and such series units are connected in parallel via terminals P2, N2 on both sides of the series units, thereby forming the power storage bank 220. The voltage between the terminal P3 and the terminal N3 is the voltage Vpsu of the power storage unit 221, and the voltage between a terminal P1 and a terminal N1 is the voltage Vps of the power storage bank 220. The terminals P1, N1 of the power storage bank 220 are respectively connected to the positive DC terminal 6P and the negative DC terminal 6N of the power converter 120 via the DC breaker 33 and the like.

### <Startup sequence for power system stabilization system 2>

Next, a startup sequence for the power system stabilization system 2 according to embodiment 1 will be described.

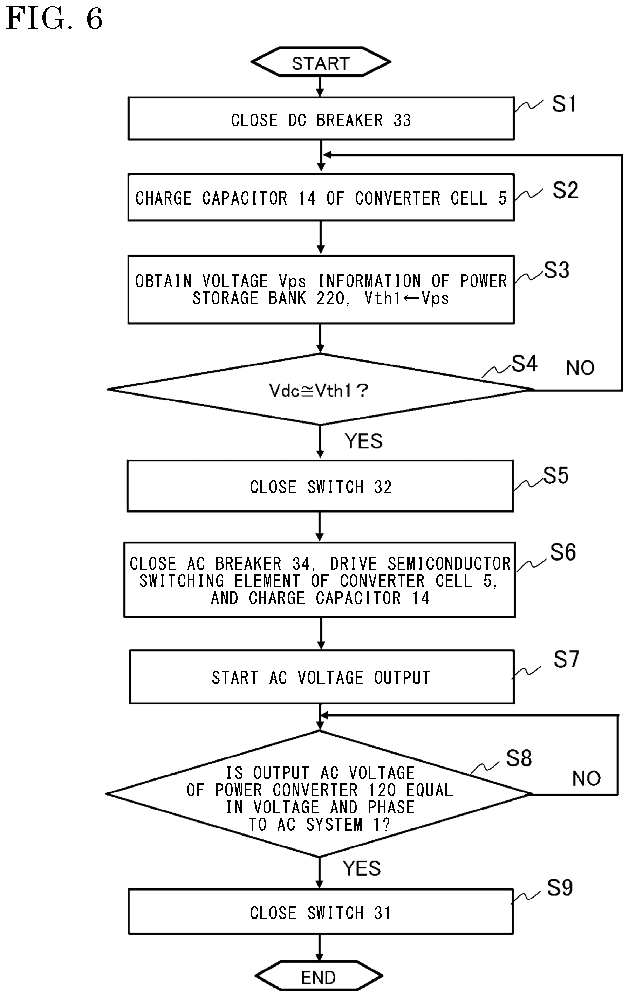

FIG. 6 is a flowchart showing the startup sequence for the power system stabilization system 2 according to embodiment 1. Specifically, FIG. 6 shows a method for starting the power system stabilization system 2 through charging of the capacitor 14 in each converter cell 5 included in the power converter 120 of the power conversion device 10 using the power of the power storage bank 220, and an operation that is performed by the control device 140 of the power conversion device 10.

In the initial state, the DC breaker 33, the switch 32, the AC breaker 34, and the switch 31 are all in the open state.

In step S1, the control device 140 closes the DC breaker 33 via the switching signal S_4. At this time, the switch 32 remains in the open state.

The DC breaker 33 is closed, and then, in step S2, current from the power storage bank 220 flows through the resistor 36 into each converter cell 5 included in the power converter 120. In the converter cell 5 shown in FIG. 3, this current flows from the input/output terminal 12a, through the diode element 13U1 connected in reverse parallel to the semiconductor switching element 12U1, the capacitor 14, and the diode element 13L2 connected in reverse parallel to the semiconductor switching element 12L2, to the input/output terminal 12b, thereby charging the capacitor 14 in the converter cell 5. At this time, the current flowing into the capacitor 14 in the converter cell 5 has been limited by the resistor 36, and thus the capacitor 14 in the converter cell 5 is charged at an appropriate current value.

Next, in step S3, the control device 140 sequentially obtains the DC voltage Vps of the power storage bank 220 from the management device 240 of the power storage device 20 during charging of the capacitor 14 in the converter cell 5, and sets the DC voltage Vps of the power storage bank 220 as a first reference value Vth1.

Next, in step S4, the DC voltage Vdc of the power converter 120 is compared with the first reference value Vth1. If the DC voltage Vdc is lower than the first reference value Vth1 (NO in step S4), the process returns to step S2 to perform charging again. That is, charging is repeated by returning to step S2 until the DC voltage Vdc of the power converter 120 becomes approximately equal to the first reference value Vth1.

As the capacitor 14 in the converter cell 5 is charged, the DC voltage Vdc of the power converter 120 gradually increases from 0 V, while the voltage Vps of the power storage bank 220 gradually decreases due to discharge. If the switch 32 is closed in a state where the deviation between the voltage Vps of the power storage bank 220 and the DC voltage Vdc of the power converter 120 is large, an overcurrent flows from the power storage bank 220 into the power converter 120, potentially resulting in equipment failure. Therefore, if the voltage Vdc of the power converter 120 has become approximately equal to the first reference value Vth1, that is, the voltage Vps of the power storage bank, the process proceeds to step S5, and the control device 140 closes the switch 32 via the switching signal S_3, to end charging using the power of the power storage device 20.

During charging up to the first reference value Vth1, the capacitor 14 in the power converter 120 cannot be charged to the rated voltage of the capacitor. Therefore, the process proceeds to step S6, and the control device 140 closes the AC breaker 34 via the switching signal S_1 to allow the power converter 120 to be interconnected with the AC system 1, thereby switching to startup using power from the AC system 1. After the AC breaker 34 is closed, current from the AC system 1 flows through the transformer 30 and the resistor 35 into the capacitor 14 in each converter cell 5.

Here, if all of the semiconductor switching elements 12U1, 12L1, 12U2, 12L2 are in the OFF state, charging is performed through two phases, the u phase and the v phase, through a path connecting the capacitors 14 in the positive arms 8uP, 8vP in series. In this path, the power source voltage is divided across the capacitors 14 in the positive arms 8uP, 8vP corresponding to the two phases, and the voltage of each capacitor 14 cannot be increased to the rated voltage. Assuming that the number of the converter cells 5 in each of the positive arms 8uP, 8vP is one, the capacitor voltage Vc can only be charged to approximately half the peak value of the power source voltage.

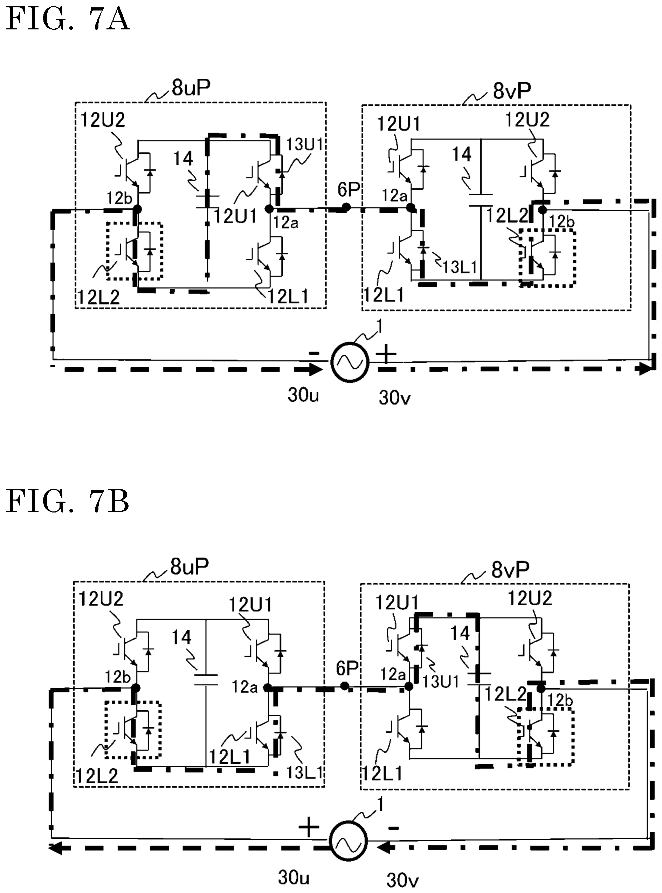

Therefore, the semiconductor switching elements are driven by the gate drive signals S_g from the control device 140, whereby each capacitor 14 is charged to the rated voltage. Hereinafter, examples of the charging path for charging the capacitors 14 will be described with reference to FIG. 7A to FIG. 7D. In each case, the semiconductor switching elements 12L2 are turned on, and the charging path is indicated by an alternate long and short dash line.

FIG. 7A is a circuit diagram illustrating a charging path for the converter cells in the u phase and the v phase, and current paths in the positive arm 8uP and the positive arm 8vP corresponding to the u phase and the v phase. In FIG. 7A, current from the AC system 1 flows from the v-phase terminal 30v of the transformer 30 through the input/output terminal 12b of the positive arm 8vP corresponding to the v phase, the semiconductor switching element 12L2, and the diode element 13L1 connected in reverse parallel with the semiconductor switching element 12L1, to the input/output terminal 12a (the arm current IvP), and then, flows from the input/output terminal 12a of the positive arm 8uP corresponding to the u phase, through the diode element 13U1 connected in reverse parallel with the semiconductor switching element 12U1, the capacitor 14, and the semiconductor switching element 12L2, to the input/output terminal 12b of the positive arm 8uP corresponding to the u phase (the arm current IuP).

Both the positive arm 8uP and the positive arm 8vP corresponding to the u phase and the v phase have semiconductor switching elements 12L2 in a conducting state, and thus the capacitor 14 in the positive arm 8vP corresponding to the v phase is bypassed and not charged, and only the capacitor 14 in the positive arm 8uP corresponding to the u phase is charged.

FIG. 7B is a circuit diagram illustrating a charging path for the converter cells in the u phase and the v phase when the polarities of the AC system voltage in FIG. 7A are reversed, and current paths in the positive arms corresponding to the u phase and the v phase. As shown in FIG. 7B, when the polarities of the AC system voltage are reversed, the capacitor 14 in the positive arm 8uP corresponding to the u phase is bypassed and not charged, and only the capacitor 14 in the positive arm 8vP corresponding to the v phase is charged.

Next, the charging path extending from the negative arm 8vN corresponding to the v phase to the negative arm 8uN corresponding to the u phase will be described.

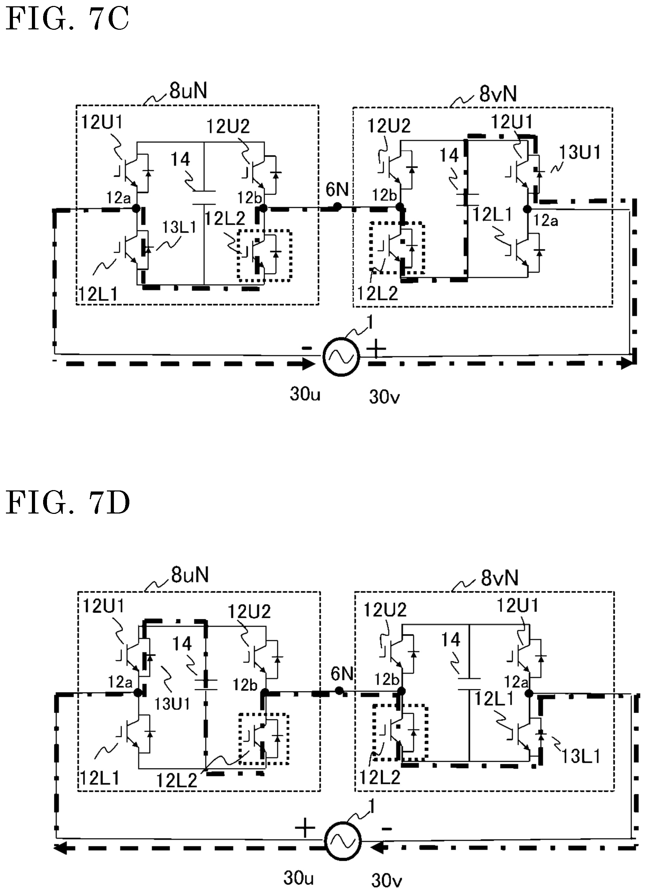

FIG. 7C is a circuit diagram illustrating a charging path for the converter cells in the u phase and the v phase, and current paths in the negative arm 8uN and the negative arm 8vN corresponding to the u phase and the v phase. In FIG. 7C, current from the AC system 1 flows from the v-phase terminal 30v of the transformer 30 through the input/output terminal 12a in the negative arm 8vN corresponding to the v phase, the diode element 13U1 connected in reverse parallel with the semiconductor switching element 12U1, the capacitor 14, and the semiconductor switching element 12L2, to the input/output terminal 12b (the arm current IvN), and then, flows to the input/output terminal 12b in the negative arm 8uN corresponding to the u phase, through the semiconductor switching element 12L2 and the diode element 13L1 connected in reverse parallel with the semiconductor switching element 12L1, to the input/output terminal 12a in the negative arm 8uN corresponding to the u phase (the arm current IuN).

Both the negative arm 8uN and the negative arm 8vN corresponding to the u phase and the v phase have the semiconductor switching elements 12L2 in a conducting state, and thus only the capacitor 14 in the negative arm 8vN corresponding to the v phase is charged, and the capacitor 14 in the negative arm 8uN corresponding to the u phase is bypassed and not charged.

FIG. 7D is a circuit diagram illustrating a charging path for the converter cells in the u phase and the v phase when the polarities of the AC system voltage in FIG. 7C are reversed, and current paths in the negative arms corresponding to the u phase and the v phase. As shown in FIG. 7D, when the polarities of the AC system voltage are reversed, only the capacitor 14 in the negative arm 8uN corresponding to the u phase is charged, and the capacitor 14 in the negative arm 8vN corresponding to the v phase is bypassed and not charged.

FIG. 7A to FIG. 7D each illustrate the charging current flowing between the two phases, the u phase and the v phase. Similarly, the charging current flowing between the two phases, the v phase and the w phase, bypasses the capacitor 14 in one phase and charges only the capacitor 14 in the other phase according to the polarities of the AC system voltage, and this operation according to the polarities of the AC system voltage is periodically repeated, whereby the power source voltage is not divided across the two phases, and the capacitors 14 in the v phase and the w phase can be charged to the rated voltage. The same applies to those in the u phase and the w phase.

The description is made by using the examples in which the semiconductor switching elements 12L2 are turned on. However, other semiconductor switching elements may also be turned on. In this case, the capacitor 14 in one phase is bypassed and only the capacitor 14 in the other phase is charged according to the polarities of the AC system voltage, and this operation according to the polarities of the AC system 1 is periodically repeated.

During charging of the capacitor 14 in each phase, the power storage bank 220 is also charged with the charging current via the switch 32. As the DC voltage Vdc of the power converter 120 increases, the voltage Vps of the power storage bank 220 also gradually increases.

When the voltage of the capacitor 14 has increased to the rated voltage, the process proceeds to step S7. The control device 140 gradually increases an AC voltage command value for the power converter 120, and AC voltage output is started. That is, the control device 140 transmits the gate signals S_g to the semiconductor switching elements 12 to control the driving of the semiconductor switching elements 12 such that the AC voltage output from the power converter 120 gradually increases.

If the output AC voltages Vu, Vv, Vw of the power converter 120 and the reference phase θ are equal in magnitude and phase to the voltages V1u, V1v, V1w of the AC system 1 after passing through the transformer 30 and the reference phase θ1 (YES in step S8), the process proceeds to step S9, and the control device 140 closes the switch 31 via the switching signal S_2, whereby the startup operation is completed.

Here, assuming the phase of the output AC voltage Vu as the reference phase θ, the phase of the output AC voltage Vv is θ-120°, and the phase of the output AC voltage Vw is θ-240°. In addition, assuming the phase of the voltage V1u of the AC system 1 as the reference phase θ1, the phase of the voltage V1v is θ1-120° and the phase of the voltage V1w is θ1-240°.

As described above, according to embodiment 1, a power system stabilization system is interconnected with an AC system, and includes a power conversion device and a power storage device. A DC side of the power conversion device is connected to the power storage device, via a connected assembly in which a first switch and a first resistor are connected in parallel and a second switch, an AC side of the power conversion device is connected to the AC system, via a connected assembly in which a third switch and a second resistor are connected in parallel and a fourth switch, the power conversion device includes a power converter including a circuit in which a plurality of converter cells, each of which includes a plurality of semiconductor switching elements and a power storage element, are connected in series, and a control device that controls driving of the semiconductor switching elements, and the power storage device includes a power storage bank including a plurality of power storage units, and a management device that manages a state of the power storage bank including at least a charge/discharge state of each power storage unit. The control device performs control so that, based on information, on the state of the power storage bank, obtained from the management device, the power storage element in each converter cell is charged to a first reference value using power of the power storage bank via the first resistor, then the plurality of semiconductor switching elements in the converter cell are driven, and a DC voltage and an AC voltage of the power converter reach predetermined values. Therefore, the power system stabilization system can stably start.

With this configuration, a dedicated power source for charging the power storage element in each converter cell is not required, so that low cost and space saving can be achieved. Furthermore, startup control is performed using the power of the power storage device and on the basis of the state of the power storage device, and thus it is possible to prevent an inrush current into the power converter when interconnecting with the power storage device. In addition, after charging of the capacitor using the power of the power storage device has been completed, interconnection with the AC system is performed, and the semiconductor switching elements are driven, whereby the capacitor, which is the power storage element included in each converter cell, can be charged to the rated voltage. That is, the control device can cause the power converter to be charged such that the DC voltage of the power converter reaches the rated voltage of the capacitor which is a predetermined value. In addition, the control device performs AC output control through driving of the semiconductor switching elements such that the AC voltage of the power converter becomes equal to the voltage of the AC system which is a predetermined value, and then controls the third switch to close, whereby the power conversion device can promptly output AC voltage. Therefore, the occurrence of overcurrent can be prevented when the power system stabilization system according to the present embodiment is interconnected with the AC system, so that stable startup can be achieved.

Stable startup can be achieved by performing such a startup not only when initially charging the capacitor in each converter cell but also when restarting the system after a shutdown caused by an accident, etc.

Furthermore, the information, on the state of the power storage bank, obtained from the management device, includes the voltage of the power storage bank, and the control device opens the first switch and closes the second switch, to supply the power of the power storage bank to the power converter and charge the power storage element in each converter cell using, as the first reference value, the voltage of the power storage bank. Thus, it is possible to supply power to the converter cell on the basis of the voltage, which decreases due to the power supply, of the power storage bank, and to prevent the occurrence of overcurrent when interconnecting, so that stable startup can be achieved. The control device obtains the voltage of the power storage bank from the management device through communication, and thus can perform more precise control.

In addition, according to embodiment 1, the control device is a control device for driving a power converter, a DC side of the power converter being connected to a power storage device via a connected assembly in which a first switch and a first resistor are connected in parallel and a second switch, an AC side of the power converter being connected to an AC system via a connected assembly in which a third switch and a second resistor are connected in parallel and a fourth switch, the power converter including a circuit in which a plurality of converter cells, each of which includes a plurality of semiconductor switching elements and a power storage element, are connected in series. The control device performs control so that, based on information, on a state of the power storage bank including at least a charge/discharge state of the power storage bank included in the power storage device, obtained from the power storage device, the power storage element in each converter cell is charged to a first reference value using power of the power storage bank via the first resistor, then the plurality of semiconductor switching elements are driven, and a DC voltage and an AC voltage of the power converter reach predetermined values. Therefore, startup control is performed using the power of the power storage device connected to the power converter and on the basis of the state of the power storage device, so that the power system stabilization system can stably start.

### Embodiment 2

Hereinafter, a power system stabilization system according to embodiment 2 will be described with reference to the drawings.

In embodiment 1, the control device 140 sets the voltage Vps of the power storage bank 220 obtained from the management device 240, as the first reference value Vth1. In the present embodiment 2, a startup sequence in which, even if the DC voltage Vdc of the power converter 120 has not reached the first reference value Vth1, when the voltage of the power storage bank 220 has become equal to or lower than a predetermined second reference value Vth2, charging from the power storage device 20 is stopped promptly and is switched to charging from the AC system, will be described.

### <Discharge characteristics of power storage element>

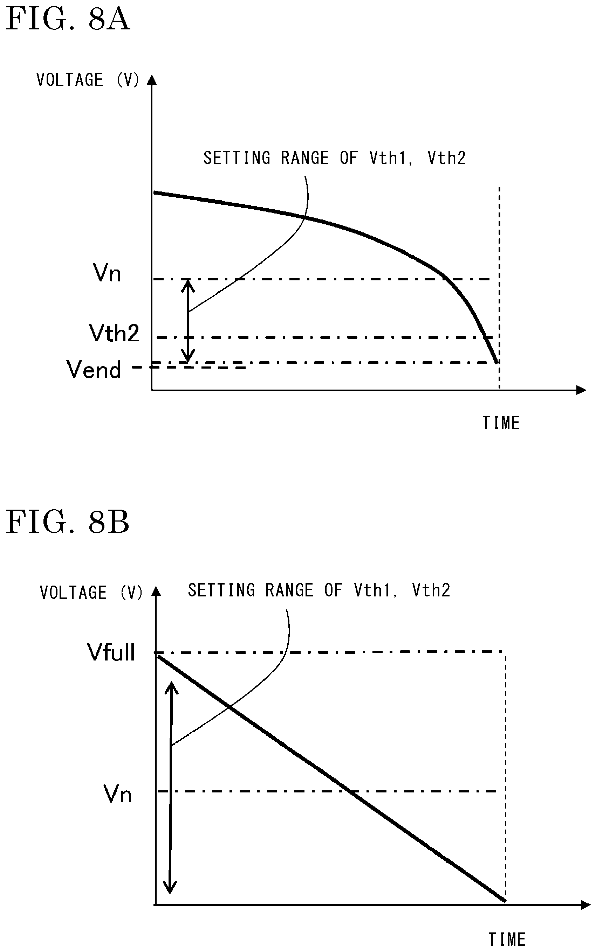

FIG. 8A shows the discharge characteristics of the storage batteries such as lithium-ion batteries shown in FIG. 5A, and FIG. 8B shows the discharge characteristics of the supercapacitors shown in FIG. 5B. In each drawing, a nominal voltage Vn is the voltage value defined as a reference for the terminal voltage obtained when a battery such as a power storage element is used in a no-load state, a discharge cut-off voltage Vend is the limit value of the discharge voltage at which discharge can be safely performed, a full-charge voltage Vfull is the voltage value in the fully charged state when the SOC reaches 100%, and each of the first reference value Vth1 and the second reference value Vth2 is set within the dischargeable range.

In embodiment 1, the capacitor 14 in each converter cell 5 is charged using the power of the power storage bank 220 until the DC voltage Vdc of the power converter 120 reaches the first reference value Vth1. When supercapacitors are used as the power storage element in the power storage bank 220, the supercapacitors have a wide dischargeable voltage range as shown in FIG. 8B. Thus, the first reference value Vth1 is set to the voltage value of the power storage bank 220, so that a stable startup can be achieved using the startup sequence in embodiment 1.

When storage batteries, for example, lithium-ion batteries, are selected as the power storage element in the power storage bank 220, the storage batteries are typically stored at an SOC below 50% in order to prevent degradation. In addition, as shown in FIG. 8A, the discharge cut-off voltage Vend is defined. Therefore, if the voltage Vps of the power storage bank 220 has become equal to the discharge cut-off voltage Vend before the DC voltage Vdc of the power converter 120 described in embodiment 1 reaches the first reference value Vth1, charging using the power of the storage batteries can no longer continue, resulting in a state where there is a deviation between the voltage Vps of the power storage bank 220 and the DC voltage Vdc of the power converter 120.

As charging continues using the power of the storage batteries, the voltage of the storage batteries gradually decreases. For example, the second reference value Vth2 is set in a range that is higher than the discharge cut-off voltage Vend and equal to or lower than the nominal voltage. If the voltage of the storage batteries has become equal to or lower than the second reference value Vth2 during charging of the converter cell 5, the power supply from the storage batteries in the power storage bank 220 is stopped before the DC voltage Vdc of the power converter 120 reaches the first reference value Vth1, and is switched to power supply from the AC system 1, whereby over-discharge of the storage batteries can be prevented.

### <Startup sequence for power system stabilization system 2>

Next, a startup sequence for a power system stabilization system 2 according to embodiment 2 will be described.

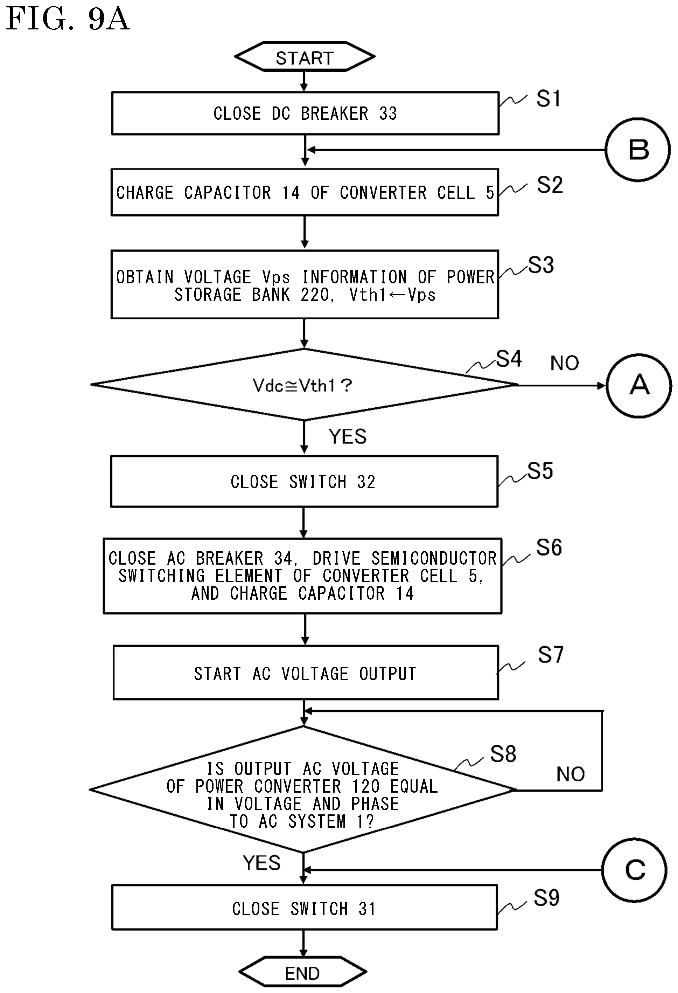

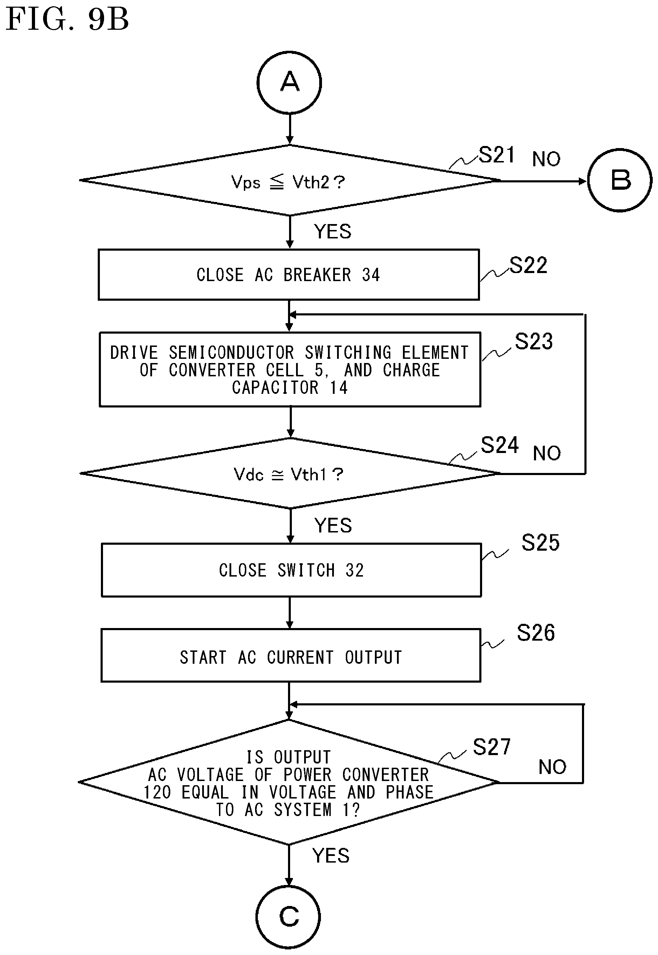

FIGS. 9A and 9B are flowcharts each showing the startup sequence for the power system stabilization system 2 according to embodiment 2. Since step S1 to step S9 follow the same sequence as in FIG. 6 of embodiment 1, the description is omitted, and the differences will be mainly described.

In step S4, the DC voltage Vdc of the power converter 120 is compared with the first reference value Vth1. If the DC voltage Vdc is lower than the first reference value Vth1, that is, if the DC voltage Vdc of the power converter 120 has not reached the first reference value Vth1 (NO in step S4), the process proceeds to step S21.

In step S21, it is determined whether or not the voltage Vps of the power storage bank 220 is equal to or lower than the second reference value Vth2. Here, as shown in FIG. 8A, the second reference value Vth2 is higher than the discharge cut-off voltage Vend of the power storage bank 220 and is lower than the nominal voltage Vn.

In step S21, if the voltage Vps of the power storage bank 220 is higher than the second reference value Vth2 (NO in step S21), the process returns to step S2.

In step S21, if the voltage Vps of the power storage bank 220 is equal to or lower than the second reference value Vth2 (YES in step S21), the process proceeds to step S22, to close the AC breaker 34. At this time, the switch 32 on the power storage device 20 side remains open in order to prevent an inrush current caused due to a deviation in DC voltage.

The AC breaker 34 is closed, and then current from the AC system 1 flows through the transformer 30 and the resistor 35 to the capacitors 14 of the converter cells 5.

In step S23, as in embodiment 1, the control device 140 turns on the semiconductor switching element 12L2 to charge each capacitor 14 until the DC voltage Vdc of the power converter 120 reaches the first reference value Vth1.

In step S24, if the DC voltage Vdc of the power converter 120 has reached or become approximately equal to the first reference value Vth1, the process proceeds to step S25.

In step S25, the switch 32 is closed to bypass the resistor 36, thereby suppressing power loss during startup.

Next, in step S26, AC voltage output is started, and the output AC voltage of the power converter 120 is controlled to have a magnitude and a phase that are the same as those of the AC system voltage after passing through the transformer 30 (step S27).

In step S27, if the output AC voltages Vu, Vv, Vw of the power converter 120 and the reference phase θ are equal in magnitude and phase to the voltages V1u, V1v, V1w of the AC system after passing through the transformer 30 and the reference phase θ1 (YES in step S27), the process proceeds to step S9, to close the switch 31, whereby startup is completed.

As described above, assuming the phase of the output AC voltage Vu as the reference phase θ, the phase of the output AC voltage Vv is θ-120° and the phase of the output AC voltage Vw is θ-240°. In addition, assuming the phase of the voltage V1u of the AC system 1 as the reference phase θ1, the phase of the voltage V1v is θ1-120° and the phase of the voltage V1w is θ1-240°.

As described above, in embodiment 2, the same effects as in embodiment 1 are exhibited. Furthermore, in the power system stabilization system, if the voltage of the power storage bank obtained from the management device has become equal to or higher than the discharge cut-off voltage and equal to or lower than the second reference value, which is lower than the nominal voltage, during charging of the power storage element in each converter cell, the control device closes the fourth switch and performs control so as to switch to power supply from the AC system. This operation causes the power supply from the power storage bank to stop when the voltage of the power storage bank has become equal to or lower than the second reference value. Therefore, in the case where the power storage element in the power storage bank is composed of storage batteries, it is possible to prevent over-discharge of the storage batteries, to prevent the occurrence of overcurrent when interconnecting with the power storage bank and the AC system, and to achieve stable startup.

### Embodiment 3

Hereinafter, a power system stabilization system according to embodiment 3 will be described with reference to the drawings.

In embodiment 1, when the capacitor 14 in each converter cell 5 has reached the first reference value Vth1, charging using the power of the power storage bank 220 is stopped and is switched to charging using the power from the AC system 1. Then, both the capacitor 14 in each converter cell 5 and the power storage bank 220 are charged using power from the AC system 1.

In embodiment 3, an example in which charging amount is controlled on the basis of the charge characteristics of the power storage element forming each power storage module 222 in the power storage bank 220, will be described.

### <Charge characteristics of power storage element>

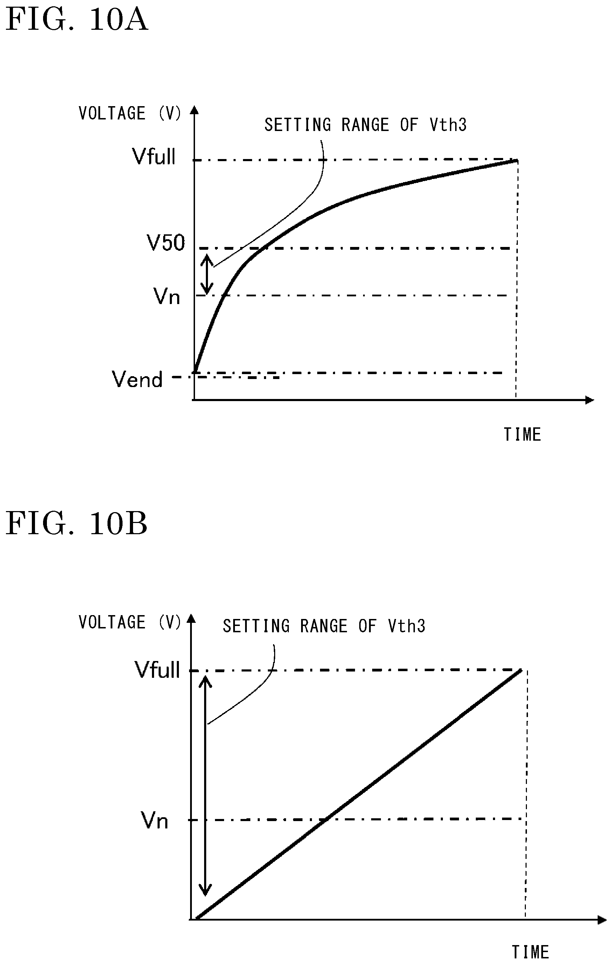

FIG. 10A shows the charge characteristics when the power storage element is the storage batteries 223 such as lithium-ion batteries, and FIG. 10B shows the charge characteristics when the power storage element is the supercapacitors 224.

As shown in FIG. 10B, when the supercapacitors 224 are used as the power storage element in the power storage bank 220, the supercapacitors 224 do not suffer performance degradation due to full charging, and therefore, have a wide chargeable voltage range. This chargeable voltage range is higher than 0 V and lower than the full-charge voltage Vfull.

However, when the storage batteries 223, for example, lithium-ion batteries, are selected as the power storage element in the power storage bank 220, the storage batteries 223 degrade more quickly when the storage batteries are repeatedly fully charged, and thus are typically stored at an SOC below 50%. Therefore, it is considered appropriate to start at an SOC of below about 50% in order to leave maximum margin for charging and discharging of the storage batteries at the startup of the power system stabilization system.

Accordingly, the target charging voltage is preset as a third reference value Vth3 according to the power storage element in the power storage bank 220. When the supercapacitors 224 are used as the power storage element, as shown in FIG. 10B, the third reference value Vth3 may be set within a wide chargeable voltage range.

When the power storage element is the storage batteries 223, as shown in FIG. 10A, the third reference value Vth3 is set in a range that is equal to or higher than the nominal voltage Vn and equal to or lower than the voltage V50 at an SOC of 50%.

### <Startup sequence for power system stabilization system 2>

Next, a startup sequence for the power system stabilization system 2 according to embodiment 3 will be described.

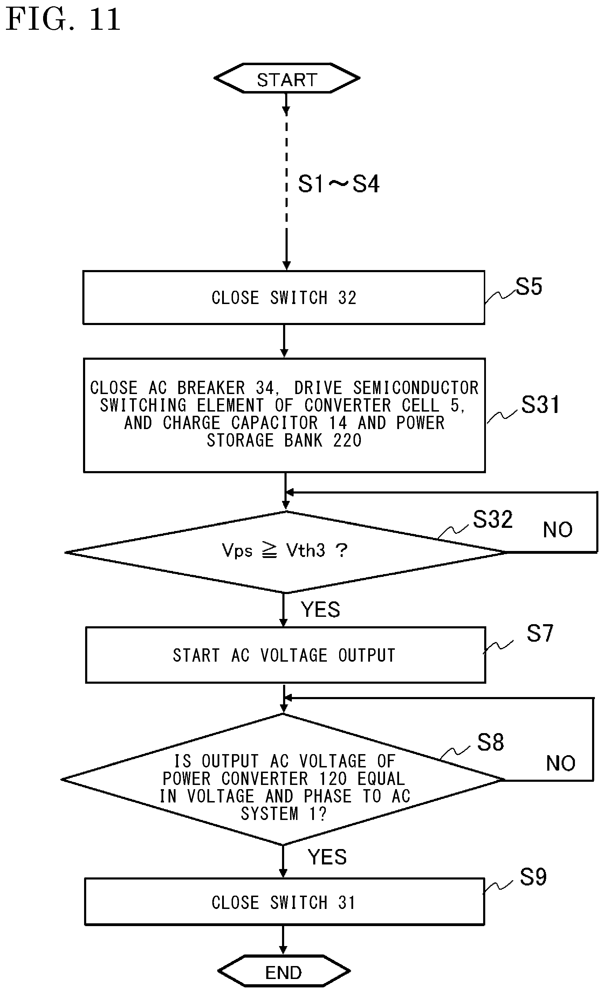

FIG. 11 is a flowchart showing the startup sequence for the power system stabilization system 2 according to embodiment 3. Since step S1 to step S5 follow the same sequence as that in FIG. 6 of embodiment 1, the description is omitted, and the differences will be mainly described. In FIG. 11, for convenience sake, step S1 to step S4 are omitted.

In step S5, the switch 32 is closed, and then the process proceeds to step S31.

After the AC breaker 34 is closed, in step S31, as in embodiment 1, the control device 140 turns on the semiconductor switching element 12L2, to charge the capacitor 14 in each converter cell 5 and the power storage bank 220.

In step S32, it is determined whether or not the voltage Vps of the power storage bank 220 has reached the third reference value Vth3. If the voltage Vps of the power storage bank 220 has reached the third reference value Vth3 (YES in step S32), the process proceeds to step S7.

Then, as in embodiment 1, in step S7, the AC voltage output is started. In step S8, if the output AC voltage of the power converter 120 is equal in magnitude and phase to the AC system voltage (YES in step S8), the process proceeds to step S9, to close the switch 31, whereby startup is completed.

In step S32, when the power storage element is the storage batteries 223, since the third reference value Vth3 is set in a range that is equal to or higher than the nominal voltage Vn and equal to or lower than the voltage V50 at an SOC of 50%, even if the amount of charge increases, charging is completed when the voltage reaches the voltage V50, so that charging can be completed in a state where the SOC of storage batteries 223 is about 50%. Therefore, degradation and overcharging of the storage batteries 223 can be prevented, and it is possible to leave margin for charging and discharging of the storage batteries 223 at the startup of the power system stabilization system.

On the other hand, even when the power storage element is the supercapacitors 224, an appropriate charging state can be achieved in step S32 by setting the third reference value Vth3 in a chargeable range. For example, when the third reference value Vth3 is set to the nominal voltage, it is possible to leave sufficient margin for charging and discharging at the startup of the power system stabilization system.

As described above, in embodiment 3, the same effects as in embodiment 1 are exhibited. Furthermore, in the power system stabilization system, the control device is configured to stop supplying power from the AC system to the power converter, when the voltage of the power storage bank obtained from the management device has reached the preset third reference value during supplying the power of the AC system to the power converter. Therefore, when the power storage unit is composed of storage batteries, as long as the third reference value Vth3 is set in the range that is equal to or higher than the nominal voltage Vn and equal to or lower than the voltage V50 at an SOC of 50%, degradation and overcharging of the storage batteries can be prevented, and stable startup can be achieved while leaving margin for charging and discharging of the storage batteries at the startup of the power system stabilization system. Similarly, when the power storage unit is composed of supercapacitors, as long as the third reference value Vth3 is set to the nominal voltage Vn, stable startup can be achieved while leaving margin for charging and discharging of the supercapacitors at the startup of the power system stabilization system.

### Embodiment 4

Hereinafter, a power system stabilization system according to embodiment 4 will be described.

Embodiment 2 shows the startup sequence in which, even if the DC voltage Vdc of the power converter 120 has not reached the first reference value Vth1, when the voltage Vps of the power storage bank 220 has become equal to or lower than the second reference value Vth2, charging using the power of the power storage device 20 is stopped and switched to charging from the AC system 1. In the present embodiment 4, an example in which, when the power storage element is storage batteries, the relationship between the SOC and an open circuit voltage (hereinafter, referred to as OCV) of the storage batteries is used to estimate the SOC, to start the power system stabilization system, will be described.

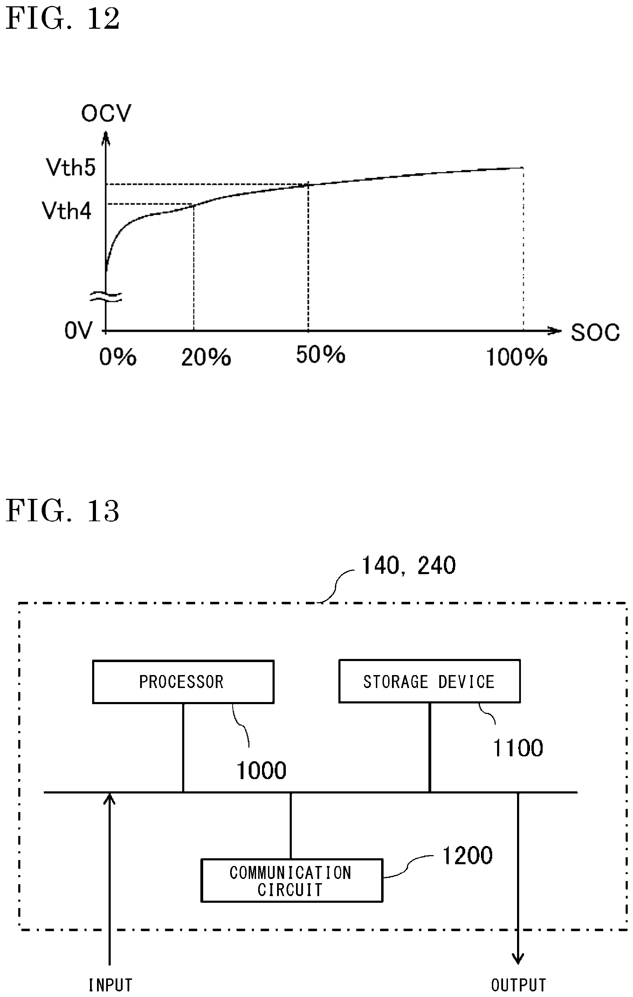

FIG. 12 shows an example of the relationship between the SOC and the OCV of the lithium-ion batteries as the storage batteries. When the power storage element is lithium-ion batteries, the management device 240 of the power storage device 20 can estimate the SOC of the power storage bank 220 from the voltage Vpsu of the power storage unit 221, using the SOC-OCV characteristics shown in FIG. 12.

In the startup sequence for the power system stabilization system according to embodiment 4, in step S21 shown in FIG. 9B, if the SOC, of the power storage bank 220, estimated by the management device 240 of the power storage device 20 has becomes equal to or lower than a preset fourth reference value SOCth4, the process proceeds to step S22. At this time, the fourth reference value SOCth4 is set to an SOC of about 20%. As described above, in the sequence, charging using the power of the power storage bank 220 is stopped, so that over-discharge of the storage batteries 223 is prevented, the occurrence of overcurrent can be prevented when interconnecting with the power storage bank 220 and the AC system 1, and stable startup can be achieved.

In step S21, the OCV voltage at an SOC of 20% in FIG. 12 is set as a fourth reference value Vth4, and the control device 140 obtains the voltage Vpsu of the power storage unit 221 from the management device 240 of the power storage device 20, and it may be determined whether Vpsu≤Vth4 or not.

As described above, in embodiment 4, the same effects as in embodiment 2 are exhibited. Furthermore, in the power system stabilization system, the power storage unit includes the plurality of storage batteries as the power storage element, the management device estimates the SOC of the power storage bank from the voltage of the power storage unit, and the control device is configured to close the fourth switch and switch to power supply from the AC system, when the SOC of the power storage bank estimated by the management device has become equal to or lower than the preset fourth reference value during charging of the power storage element in each converter cell using the power of the power storage bank. Therefore, in the sequence, charging using the power of the power storage bank is stopped, so that over-discharge of the storage batteries is prevented, the occurrence of overcurrent when interconnecting with the power storage bank and the AC system can be prevented, and stable startup can be achieved.

### Embodiment 5

Hereinafter, a power system stabilization system according to embodiment 5 will be described.

In embodiment 3, if the voltage Vps of the power storage bank 220 has reached the third reference value Vth3 in step S32 shown in FIG. 11, the AC voltage output is started in step S7, and the output AC voltage of the power converter 120 is controlled to have the same magnitude and phase as the AC system voltage, to perform startup. In the present embodiment 5, as in embodiment 4, an example in which, when the power storage element is storage batteries, the SOC is estimated using the relationship between the SOC and the open circuit voltage of the storage batteries, to start the power system stabilization system, will be described.

In step S32 shown in FIG. 11, if the SOC of the power storage bank 220 estimated by the management device 240 of the power storage device 20 has become equal to or higher than a preset fifth reference value SOCth5, the process proceeds to step S7. At this time, the fifth reference value SOCth5 is set to a SOC of about 50%. As described above, in the sequence, charging using the AC system 1 is stopped, so that degradation and overcharging of the storage batteries 223 can be prevented, and stable startup can be achieved at the startup of the power system stabilization system.

In step S32, the OCV voltage at an SOC of 50% in FIG. 12 is set as a fifth reference value Vth5, and the control device 140 is configured to obtain the voltage Vpsu of the power storage unit 221 from the management device 240 of the power storage device 20, and it may be determined whether Vpsu≥Vth5 or not.

As described above, in embodiment 5, the same effects as in embodiment 3 are exhibited. Furthermore, in the power system stabilization system, the power storage unit includes the plurality of storage batteries as the power storage element, the management device estimates the SOC of the power storage bank from the voltage of the power storage unit, and the control device is configured to stop supplying power from the AC system to the power converter when the SOC of the power storage bank estimated by the management device has reached the preset fifth reference value during supplying the power of the AC system to the power converter. As described above, in the sequence, charging using the AC system is stopped, so that degradation and overcharging of the storage batteries can be prevented and stable startup can be achieved at the startup of the power system stabilization system.

FIG. 13 shows an example of the configuration of hardware of each of the control device 140 and the management device 240 according to each of the above embodiments 1 to 5. As shown in FIG. 13, each of the control device 140 and the management device 240 includes, as processing circuits, a processor 1000, a storage device 1100, and a communication circuit 1200, for example.

The processor 1000 may be formed by a central processing unit (CPU), an application specific integrated circuit (ASIC), an integrated circuit (IC), a field programmable gate array (FPGA), various logic circuits, various signal processing circuits, and the like. A plurality of processors 1000 that are the same type or different types may be provided and may execute processes in a shared manner.

The storage device 1100 includes a random access memory (RAM) configured to allow data to be read and written from the processor 1000, a read only memory (ROM) configured to allow data to be read from the processor 1000 or the like. The processor 1000 executes a program inputted from the storage device 1100 such as a ROM.

The communication circuit 1200 is provided, and thus signals can be transmitted and received between the control device 140 and the management device 240 via wired or wireless communication.

### <Other embodiments>

(1) In FIG. 3, the switching elements forming the converter cell 5 are not limited to those made of a silicon (Si) semiconductor, and may also be made of a semiconductor such as silicon carbide (SiC) or gallium nitride (GaN), which is a wide bandgap semiconductor. Wide bandgap semiconductors are suitable for application in MMCs due to the characteristics such as higher switching speed, capability for high-temperature operation, and high dielectric breakdown field strength.
(2) In FIG. 3, although the example in which the converter cell 5 is configured using a full-bridge circuit is shown, a half-bridge circuit may be used. The circuit structure is simplified when configured using a half-bridge circuit, but the configuration with a full-bridge circuit provides higher reliability and therefore, is more suitable.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

1 AC system
2 power system stabilization system
3uP, 3uN, 3vP, 3vN, 3wP, 3wN reactor
4u, 4v, 4w connection point
5 converter cell
6P positive DC terminal
6N negative DC terminal
8uP, 8uN, 8vP, 8vN, 8wP, 8wN arm
9u, 9v, 9w leg circuit
10 power conversion device
12, 12U1, 12L1, 12U2, 12L2 semiconductor switching element
13U1, 13L1, 13U2, 13L2 diode element
14 capacitor
15 voltage detector
20 power storage device
30 transformer
30u u-phase terminal
30v v-phase terminal
30w w-phase terminal
31, 32 switch
33 DC breaker
34 AC breaker
35, 36 resistor
120 power converter
140 control device
220 power storage bank
221 power storage unit
222 power storage module
223 storage battery
224 supercapacitor
240 management device
1000 processor
1100 storage device
1200 communication circuit
Vu, Vv, Vw AC voltage
V1u, V1v, V1w voltage of AC system
θ, θ1 reference phase
Vdc DC voltage
Vc capacitor voltage
Vps voltage of power storage bank
Vpsu voltage of power storage unit

## Claims

1. A power system stabilization system which is interconnected with an AC system, the power system stabilization system comprising:
a power conversion device; and
a power storage device, wherein
a DC side of the power conversion device is connected to the power storage device, via a connected assembly in which a first switch and a first resistor are connected in parallel and a second switch,
an AC side of the power conversion device is connected to the AC system, via a connected assembly in which a third switch and a second resistor are connected in parallel and a fourth switch,
the power conversion device includes a power converter including a circuit in which a plurality of converter cells, each of which includes a plurality of semiconductor switching elements and a power storage element, are connected in series, and a control device that controls driving of the semiconductor switching elements,
the power storage device includes a power storage bank including a plurality of power storage units, and a management device that manages a state of the power storage bank including at least a charge/discharge state of each power storage unit, and
the control device performs control so that,
based on information, on the state of the power storage bank, obtained from the management device, the power storage element in each converter cell is charged to a first reference value using power of the power storage bank via the first resistor,
then the plurality of semiconductor switching elements are driven, and
a DC voltage and an AC voltage of the power converter reach predetermined values.

2. The power system stabilization system according to claim 1, wherein
the information, on the state of the power storage bank, obtained from the management device, includes a voltage of the power storage bank, and
the control device opens the first switch and closes the second switch, to supply power of the power storage bank to the power converter and charge the power storage element in each converter cell using, as the first reference value, the voltage of the power storage bank obtained from the management device.

3. The power system stabilization system according to claim 1 or 2, wherein
the control device:
performs control so that, after the power storage element in the converter cell is charged to the first reference value, the plurality of semiconductor switching elements are driven, power of the AC system is supplied to the power converter via the second resistor, and the DC voltage of the power converter reaches a rated voltage, which is a predetermined value, of the power storage element in the converter cell;
when the DC voltage of the power converter reaches the predetermined value through the supply of power from the AC system to the power converter,
performs AC voltage output control while increasing an AC voltage command value for the power converter; and
when the AC voltage of the power converter reaches a voltage of the AC system which is a predetermined value, closes the third switch.

4. The power system stabilization system according to any one of claims 1 to 3, wherein
the power storage unit includes a plurality of storage batteries as a power storage element,
the information, on the state of the power storage bank, obtained from the management device, includes a voltage of the power storage bank, and
the control device,
when the voltage of the power storage bank obtained from the management device becomes equal to or higher than a discharge cut-off voltage and equal to or lower than a second reference value, which is lower than a nominal voltage, during charging of the power storage element in the converter cell using power of the power storage bank,
closes the fourth switch and drives the plurality of semiconductor switching elements, to supply power of the AC system to the power storage element in the power converter via the second resistor and charge the power storage element in the power converter to the first reference value.

5. The power system stabilization system according to any one of claims 1 to 3, wherein
the information, on the state of the power storage bank, obtained from the management device, includes a voltage of the power storage bank, and
the control device,
when the voltage of the power storage bank obtained from the management device reaches a preset third reference value during supplying power of the AC system to the power converter, stops the supply of power from the AC system to the power converter.

6. The power system stabilization system according to claim 5, wherein
the power storage unit includes a plurality of storage batteries as a power storage element,
the management device estimates an SOC of the power storage bank from a voltage of the power storage unit, and
the control device,
when the voltage of the power storage bank obtained from the management device reaches a voltage at an SOC of 50% of the power storage bank during supplying power of the AC system to the power converter, stops the supply of power from the AC system to the power converter.

7. The power system stabilization system according to claim 5, wherein
the power storage unit includes a plurality of supercapacitors as a power storage element, and
the control device,
when the voltage of the power storage bank obtained from the management device reaches a nominal voltage during supplying power of the AC system to the power converter, stops the supply of power from the AC system to the power converter.

8. The power system stabilization system according to any one of claims 1 to 3, wherein
the power storage unit includes a plurality of storage batteries as a power storage element,
the management device estimates an SOC of the power storage bank from a voltage of the power storage unit, and
the control device,
when the SOC of the power storage bank estimated by the management device becomes equal to or lower than 20% which is a fourth reference value during charging of the power storage element in the converter cell using power of the power storage bank,
closes the fourth switch and drives the plurality of semiconductor switching elements, to supply power of the AC system to the power storage element in the power converter via the second resistor and charge the power storage element in the power converter to the first reference value.

9. The power system stabilization system according to any one of claims 1 to 3,
the power storage unit includes a plurality of storage batteries as a power storage element,
the management device estimates an SOC of the power storage bank from a voltage of the power storage unit, and
the control device,
when the SOC of the power storage bank estimated by the management device reaches 50% which is a preset fifth reference value during supplying power of the AC system to the power converter, stops the supply of power from the AC system to the power converter.

10. A method for starting a power system stabilization system, in which
a DC side of a power conversion device is connected to a power storage device, via a connected assembly in which a first switch and a first resistor are connected in parallel and a second switch,
an AC side of the power conversion device is connected to an AC system, via a connected assembly in which a third switch and a second resistor are connected in parallel and a fourth switch,
the power conversion device includes a power converter including a circuit in which a plurality of converter cells, each of which includes a plurality of semiconductor switching elements and a power storage element, are connected in series, and a control device that controls driving of the plurality of semiconductor switching elements, and
the power storage device includes a power storage bank including a plurality of power storage units, and a management device that manages a state of the power storage bank including at least a charge/discharge state of each power storage unit,
the method comprising:
based on information, on the state of the power storage bank, obtained from the management device, charging the power storage element in each converter cell to a first reference value using power of the power storage bank via the first resistor;
then driving the plurality of semiconductor switching elements in the converter cell; and
causing a DC voltage and an AC voltage of the power converter to reach predetermined values.

11. The method for starting the power system stabilization system according to claim 10, the method comprising:
when the DC voltage of the power converter reaches a rated voltage, which is a predetermined value, of the power storage element in the converter cell, by charging of the power storage element in the converter cell using power of the power storage bank and by charging of the power storage element in the converter cell through supply of power from the AC system to the power converter, caused by driving of the plurality of semiconductor switching elements,
performing AC voltage output control while increasing an AC voltage command value for the power converter; and
when the AC voltage of the power converter reaches a voltage of the AC system which is a predetermined value,
closing the third switch.

12. A control device for driving a power converter, a DC side of the power converter being connected to a power storage device via a connected assembly in which a first switch and a first resistor are connected in parallel and a second switch, an AC side of the power converter being connected to an AC system via a connected assembly in which a third switch and a second resistor are connected in parallel and a fourth switch, the power converter including a circuit in which a plurality of converter cells, each of which includes a plurality of semiconductor switching elements and a power storage element, are connected in series, wherein
the control device performs control so that, based on information, on a state of the power storage bank including at least a charge/discharge state of the power storage bank included in the power storage device, obtained from the power storage device, the power storage element in each converter cell is charged to a first reference value using power of the power storage bank via the first resistor,
then the plurality of semiconductor switching elements are driven, and
a DC voltage and an AC voltage of the power converter reach predetermined values.

13. The control device according to claim 12, wherein
the information, on the state of the power storage bank, obtained from the power storage device, includes a voltage of the power storage bank, and
the control device opens the first switch and closes the second switch, to supply power of the power storage bank to the power converter and charge the power storage element in each converter cell using, as the first reference value, the voltage of the power storage bank obtained from the power storage device.

14. The control device according to claim 12 or 13, wherein
the control device:
performs control so that, after the power storage element in the converter cell is charged to the first reference value, the plurality of semiconductor switching elements are driven, power of the AC system is supplied to the power converter via the second resistor, and the DC voltage of the power converter reaches a rated voltage, which is a predetermined value, of the power storage element in the converter cell;
when the DC voltage of the power converter reaches the predetermined value through the supply of power from the AC system to the power converter,
performs AC voltage output control while increasing an AC voltage command value for the power converter; and
when the AC voltage of the power converter reaches a voltage of the AC system which is a predetermined value, closes the third switch.
